# EUROPÄISCHE PATENTSCHRIFT

(11) **EP 2 873 894 B1**
(45) Veröffentlichungstag und Bekanntmachung des Hinweises auf die Patenterteilung: **10.05.2017**
(21) Anmeldenummer: 14190693.3
(22) Anmeldetag: 28.10.2014
(51) Int. Cl.: F16J 13/12, B62D 25/24

(54) **Verschlussstopfen**
Stopper
Bouchon de fermeture

(30) Priorität: 15.11.2013 DE 102013112629
(43) Veröffentlichungstag der Anmeldung: 20.05.2015
(73) Patentinhaber: ITW Fastener Products GmbH, 58642 Iserlohn (DE)
(72) Erfinder: Jatzke, Stefan, 67280 Ebertsheim (DE)
(74) Vertreter: Hauck Patentanwaltspartnerschaft mbB

(56) Entgegenhaltungen:
- EP-A1- 0 970 878
- EP-A2- 1 426 272
- CA-A1- 2 843 635
- DE-A1- 3 902 500
- US-A1- 2013 219 798

## Beschreibung

Die Erfindung betrifft einen Verschlussstopfen zum Verschließen einer Öffnung, insbesondere in einer Fahrzeugkarosserie.

Im Karosseriebau entsteht eine Vielzahl von Öffnungen und Löchern, die ein Eindringen von Feuchtigkeit und von Verschmutzungen erlauben würden. Ferner bilden derartige Öffnungen und Löcher auch sogenannte Schallbrücken. Daher werden diese Öffnungen und Löcher mit Verschlussstopfen verschlossen. Ziel ist es, die Öffnungen und Löcher abzudichten und zudem eine Schalldämpfung herbeizuführen.

Zum Verschluss dieser Karosserieöffnungen werden Verschlussstopfen eingesetzt. Hierzu ist bereits eine Vielzahl von Stopfengeometrien bekannt.

Beispielsweise zeigt die DE 102 53 983 A1 einen Verschlussstopfen zum Dichten und schalldämpfenden Verschließen eines Lochs in einem Bauteil. Der Verschlussstopfen weist einen ringförmigen Dichtabschnitt auf, der beim Einsetzen des Verschlussstopfens in die Öffnung zusammengedrückt wird und sich dichtend an den Rand der Öffnung anlegt.

In der EP 0 970 878 A1 ist ein Verschlussstopfen für Öffnungen in Metallblechen gezeigt, der eine zentrale Kuppel, eine äußere Dichtlippe und einen ringförmigen Abschnitt mit einer Rastkante umfasst. Um eine Öffnung zu verschließen, wird der Verschlussstopfen mit dem ringförmigen Abschnitt in die Öffnung eingesetzt. Anschließend wird die Kuppel axial eingedrückt, bis sich der Verschlussstopfen von innen nach außen umstülpt.

Bei den bekannten Lösungen hat sich als nachteilig herausgestellt, dass die Montage der Verschlussstopfen in Öffnungen der Karosserie hohe Montagekräfte erfordert.

Es ist daher die Aufgabe der vorliegenden Erfindung, die erforderlichen Montagekräfte eines Verschlussstopfens zu verringern und auch die aus dem Stand der Technik bekannten Dichtigkeitsprobleme bekannter Verschlussstopfen zu lösen.

Diese Aufgabe wird erfindungsgemäß gelöst durch einen Verschlussstopfen mit den Merkmalen des Anspruchs 1. Danach ist ein Verschlussstopfen zum Verschließen einer Öffnung mit einem ringförmigen Dichtabschnitt vorgesehen, der am Rand der Öffnung anliegen kann, und einem Spreizabschnitt, der mittels eines Faltabschnitts mit dem Dichtabschnitt verbunden sowie einstückig mit dem Dichtabschnitt ausgeführt ist und aus einer Montageposition, in der der Faltabschnitt des Spreizabschnitts mindestens zwei abgestufte Zylinderabschnitte aufweist, die in axialer Richtung hintereinander liegen, und der Dichtabschnitt zumindest an einem axialen Ende, an dem dieser eine umlaufende Rastkante aufweist, einen Montagedurchmesser hat, in eine Spreizposition verstellbar ist, in welcher der Dichtabschnitt einen größeren Durchmesser hat, wobei durch die Verstellung in die Spreizposition sich der Dichtabschnitt dichtend an den Öffnungsrand bzw. die Öffnungsinnenfläche anlegt und wobei die Zylinderabschnitte auf derselben Höhe radial nebeneinander liegen und eine Radialkraft auf den Dichtabschnitt ausüben. Die Erfindung beruht auf dem Grundgedanken, einen Stopfen zu verwenden, der in der Montageposition mit geringer Kraft in die Öffnung der Fahrzeugkarosserie eingesetzt und dann durch Druck auf einen Teil des Stopfens in der Montagerichtung in eine Spreizposition verstellt werden kann, in welcher der Stopfen zuverlässig gegen den Rand der Öffnung abdichtet. Durch den Umstand, dass der Dichtabschnitt des Verschlussstopfens zunächst einen Montagedurchmesser hat, der kleiner ist als der Durchmesser des Dichtabschnittes in der Spreizposition, lässt sich der Verschlussstopfen einfach in die Öffnung einsetzen. Je nach den Abmessungen kann dies vollständig oder zumindest annähernd reibungsfrei erfolgen. Wenn der Verschlussstopfen eingesetzt ist, wird der Spreizabschnitt von der Montageposition in die Spreizposition verstellt, so dass der Dichtabschnitt nach außen gedrückt wird und einen größeren Durchmesser erhält. Hierdurch legt sich der Dichtabschnitt dichtend an den Rand der Öffnung an, in die der Verschlussstopfen eingesetzt ist. Der Verschlussstopfen wird somit durch die Umlenkung von axialem Druck in eine radiale Verformung in der Öffnung fixiert. Besonders vorteilhaft ist, dass die Eindrückrichtung des Spreizabschnitts und die Einsetzrichtung des Verschlussstopfens identisch sind. Die erfindungsgemäße Gestaltung des Verschlussstopfens erlaubt es auch, dass der Dichtabschnitt sich auch bei unterschiedlichen Blechdicken an den Öffnungsrand bzw. die Öffnungsinnenfläche anlegt. Besonders vorteilhaft ist, dass der Verschlussstopfen mit geringer Montagekraft in die Öffnung eingesetzt werden kann. Zugleich erlaubt die Verstellung in die Spreizposition, dass sich der Dichtabschnitt dichtend an den Rand bzw. die Innenseiten der Öffnung anlegt und so eine gute Dichtwirkung erzielt werden kann. Außerdem wirkt der Verschlussstopfen schalldämmend. Mittels des Faltabschnitts lässt sich konstruktiv sehr einfach ein axiales Verschieben des Spreizabschnittes in eine radiale Spreizbewegung umsetzen. Außerdem lässt sich durch den Faltabschnitt das Spreizverhalten des Spreizabschnitts einstellen. Das Überführen des Spreizabschnitts von der Montageposition in die Spreizposition erfolgt durch Falten des Faltabschnitts. Hierdurch wird zudem der Verschlussstopfen in der Spreizposition dauerhaft fixiert, weil der Faltabschnitt in der Spreizposition gefaltet ist. Durch die Faltung wird zudem die Stabilität des Verschlussstopfens erhöht. Die Zylinderabschnitte bewirken ein definiertes Faltverhalten. Denkbar ist beispielsweise, dass das Falten des Faltabschnitts zwischen den beiden abgestuften Zylinderabschnitten erfolgt. Die umlaufende Rastkante erlaubt eine sichere Vorfixierung des Verschlussstopfens in der zu verschließenden Öffnung, auch bevor der Spreizabschnitt in die Spreizstellung gebracht wurde.

Außerdem ist möglich, dass der Faltabschnitt, wenn sich der Spreizabschnitt in der Spreizposition befindet, im Schnitt gesehen mäanderförmig verläuft. Der mäanderförmige Verlauf ermöglicht eine besonders stabile Form und Faltung des Faltabschnitts in der Spreizposition.

Ferner kann vorgesehen sein, dass der Faltabschnitt mit dem Dichtabschnitt an dessen axialen Ende verbunden ist, das den Montagedurchmesser hat, wenn sich der Spreizabschnitt in der Montageposition befindet.

Des Weiteren ist denkbar, dass der Spreizabschnitt plattenförmig ausgeführt ist. Diese einfache Geometrie erlaubt eine stabile, aber zugleich einfach herzustellende Form des Verschlussstopfens.

Außerdem ist möglich, dass der Spreizabschnitt einen Durchmesser hat, der größer ist als die Hälfte des Innendurchmessers des Dichtabschnitts. Durch eine derartige Gestaltung wird das Spreizverhalten des Verschlussstopfens unterstützt. Denn die Verformung des Spreizabschnitts erfolgt im Bereich zwischen Spreizabschnitt und Dichtabschnitt und somit in einem eng definierten Bereich des Verschlussstopfens. Außerdem bietet ein Spreizabschnitt, der vergleichsweise groß ausgeführt ist, eine große Angriffsfläche bei der Montage, so dass der Spreizabschnitt leicht aus der Montage- in die Spreizposition gedrückt werden kann.

Vorzugsweise ist vorgesehen, dass der Dichtabschnitt an dem axialen Ende, das dem axialen Ende gegenüberliegt, das mittels des Spreizabschnittes aufgeweitet werden kann, eine umlaufende Dichtlippe aufweist. Hierdurch kann die Dichtwirkung des Verschlussstopfens unterstützt und verbessert werden. Die Dichtlippe kann schräg zum Dichtabschnitt angeordnet und in Richtung des axialen Endes zeigen bzw. ausgerichtet sein, das mittels des Spreizabschnittes aufgeweitet werden kann. Hierdurch kann beim Einschieben des Stopfens automatisch eine Vorspannung auf die Dichtlippe aufgebracht werden, wodurch die Dichtwirkung erhöht wird.

Weiter ist vorzugsweise vorgesehen, dass der Verschlussstopfen als einstückiges Spritzgussteil ausgeführt ist. Dies ermöglicht eine kostengünstige Fertigung des Verschlussstopfens auch bei hohen Stückzahlen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht von schräg oben auf ein Ausführungsbeispiel eines erfindungsgemäßen Verschlussstopfens;
- Figur 2 eine perspektivische Unteransicht des Verschlussstopfens gemäß Figur 1;
- Figur 3 eine perspektivische Schnittdarstellung des Verschlussstopfens gemäß Figur 1;
- Figur 4 eine weitere perspektivische Schnittdarstellung des Verschlussstopfens gemäß Figur 1 in der Montageposition eingesetzt in eine Öffnung einer Fahrzeugkarosserie;
- Figur 5 eine weitere perspektivische Detailschnittdarstellung des Verschlussstopfens gemäß Figur 1 in der Spreizposition eingesetzt in eine Öffnung in einer Fahrzeugkarosserie;
- Figur 6 eine weitere perspektivische Schnittdarstellung des Verschlussstopfens gemäß Figur 1 in der Spreizposition eingesetzt in eine Öffnung einer Fahrzeugkarosserie; und
- Figur 7 eine weitere perspektivische Detailschnittdarstellung des Verschlussstopfens gemäß Figur 1 in der Spreizposition.

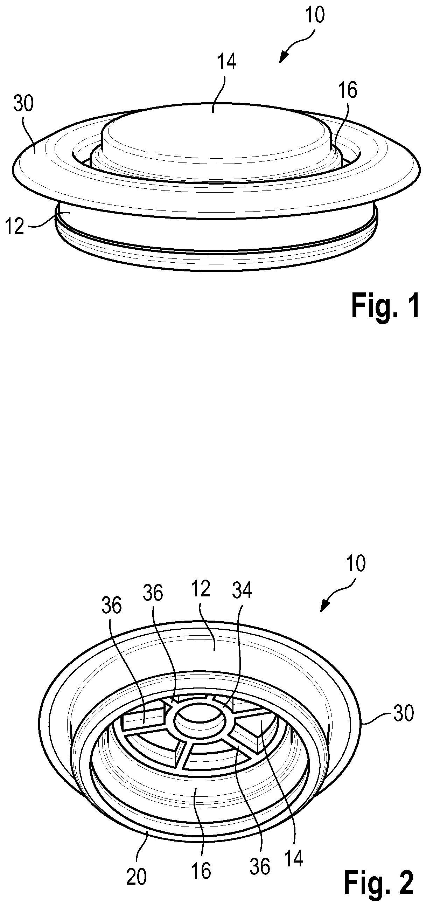

Figur 1 zeigt eine perspektivische Ansicht von schräg oben auf ein Ausführungsbeispiel eines erfindungsgemäßen Verschlussstopfens 10, der als einstückiges Spritzgussteil ausgeführt ist. Der Verschlussstopfen ist aus Kunststoff ausgeführt.

Der Verschlussstopfen 10 weist als Hauptbestandteile einen ringförmigen Dichtabschnitt 12, einen Spreizabschnitt 14 und einen Faltabschnitt 16 auf.

Der Dichtabschnitt 12 und der Spreizabschnitt 14 sind durch den Faltabschnitt 16 einstückig miteinander verbunden.

Der Dichtabschnitt 12 weist an seinem axialen Ende 20, an dem er mit dem Faltabschnitt 16 verbunden ist, eine umlaufende Rastkante 22 und eine Abfasung 24 auf. Auf die Rastkante 22 folgt eine umlaufende Auflagefläche 26, an die sich dann am anderen axialen Ende 28 eine umlaufende Dichtlippe 30 anschließt.

Die Dichtlippe 30 ist schräg zum Dichtabschnitt 12 angeordnet und in Richtung des axialen Endes ausgerichtet, an dem der Spreizabschnitt 14 mit dem Dichtabschnitt verbunden ist.

Die Auflagefläche 26 ist im weitesten Sinne zylindrisch, wobei der Dichtabschnitt 12 im Zustand des Dichtstopfens, wie er in den Figuren 1 bis 3 dargestellt ist, geringfügig konisch ist; der Durchmesser am der Dichtlippe 30 zugewandten Ende ist geringfügig größer als am mit der Rastkante 22 versehenen Ende.

Der Spreizabschnitt 14 ist nach Art einer kreisförmigen Platte ausgeführt, deren Durchmesser größer ist als die Hälfte des Innendurchmessers des Dichtabschnittes 12. Abgesehen von etwas Raum für den Faltabschnitt 16 nimmt der Spreizabschnitt den gesamten Innenraum innerhalb des Dichtabschnittes 12 ein.

Der Spreizabschnit 14 ist auf einer Seite glatt ausgeführt und auf der anderen Seite mit Verstärkungselementen 32 versehen. Die Verstärkungselemente 32 verstärken und versteifen den Spreizabschnitt 14.

Die Verstärkungselemente 32 sind hier als Verstärkungsring 34 und als Verstärkungsrippen 36 ausgeführt.

Die Verstärkungselemente sind auf der Seite des Spreizabschnittes angeordnet, die dem mit der Rastkante 22 versehenen axialen Ende des Dichtringes 12 zugewandt ist.

Der Faltabschnitt 16 verbindet den Spreizabschnitt 14 mit dem Dichtabschnitt 12, und zwar den Außenumfang des Spreizabschnittes 14 mit der Innenseite des axialen Endes des Dichtabschnittes, das im Ausgangszustand der Figuren 1 bis 3 den kleineren Durchmesser hat, also mit dem axialen Ende, das mit der Rastkante versehen ist. Er weist hier zwei abgestufte Zylinderabschnitte 38, 40 auf, wobei der Durchmesser des mit dem Spreizabschnitt 14 verbundenen Zylinderabschnitts 38 kleiner ist als der Durchmesser des mit dem Dichtabschnitt 12 verbundenen Zylinderabschnitts 40.

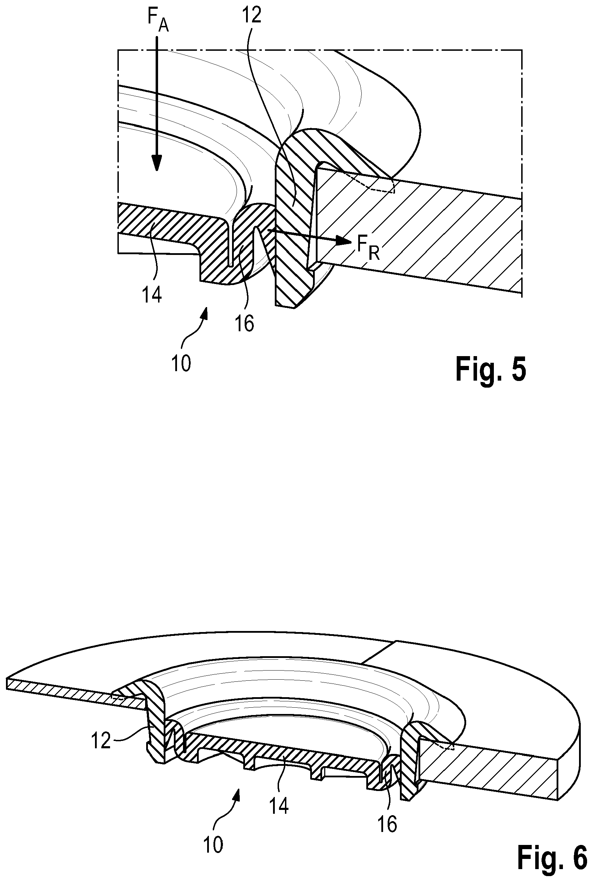

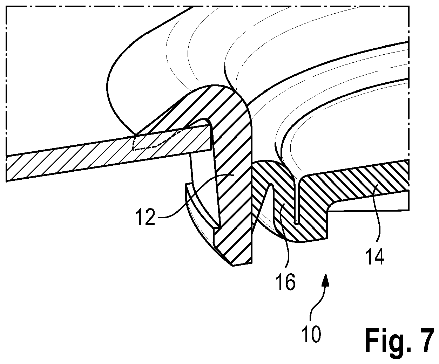

Der Verschlussstopfen 10 kann zwei Zustände einnehmen, nämlich einen unverriegelten Zustand in der Montageposition, wie er in den Figuren 1 bis 4 dargestellt ist, und einen verriegelten Zustand in der Spreizposition, wie er in den Figuren 5 bis 7 dargestellt ist.

Der Übergang von der Montageposition in die Spreizposition erfolgt dadurch, dass der Spreizabschnitt 14 aus einer Montageposition, in der der Dichtabschnitt 12 zumindest an einem axialen Ende einen Montagedurchmesser hat, in eine Spreizposition verstellbar ist, in welcher der Dichtabschnitt 12 einen größeren Durchmesser hat.

Der Durchmesser des Dichtabschnitts 12 wird dadurch vergrößert, dass der Spreizabschnitt 14 und der Faltabschnitt 16 in der Spreizposition den Dichtabschnitt 12 radial nach außen drücken. Hierdurch kann sich der Dichtabschnitt 12 an die Innenseite der Öffnung anlegen, so dass der Verschlussstopfen 10 zuverlässig in der Öffnung verklemmt wird und dort gut hält.

Der Spreizabschnitt 14 hat einen Durchmesser, der größer ist als die Hälfte des Innendurchmessers des Dichtabschnittes 12.

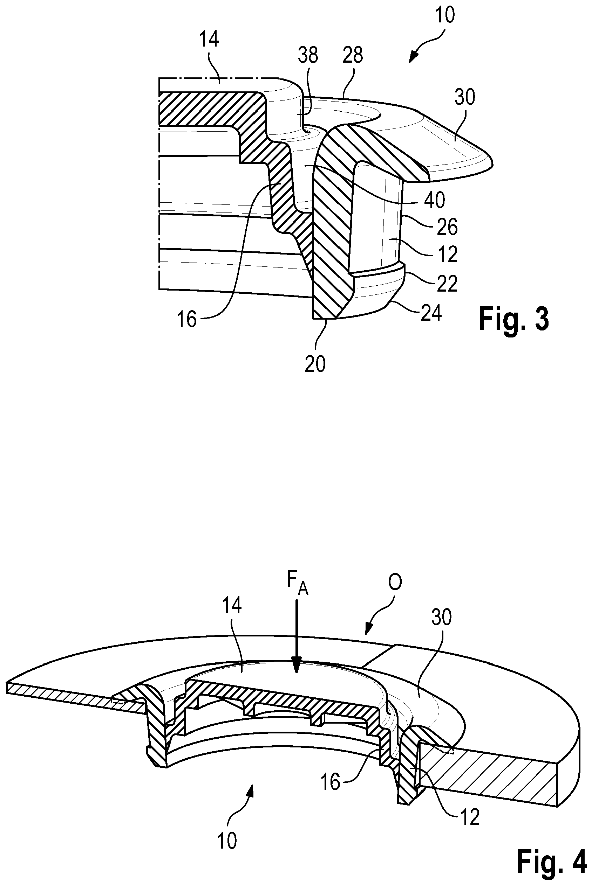

Anhand der Figuren 4 bis 7 wird nun nachstehend die Fixierung des Verschlussstopfens 10 in einer Öffnung O erläutert.

Der Verschlussstopfen 10 wird in seiner Montagestellung in die Öffnung O eingesetzt. Der Spreizabschnitt 14 ist dabei noch nicht eingedrückt, so dass er oberhalb der Dichtlippe 30 liegt.

Bei der zu verschließenden Öffnung O handelt es sich hier um eine Öffnung O einer Fahrzeugkarosserie.

Durch den Umstand, dass der Dichtabschnitt 12 des Verschlussstopfens 10 zunächst einen Montagedurchmesser hat, der kleiner ist als der Durchmesser des Dichtabschnittes 12 in der Spreizposition, kann der Verschlussstopfen 10 ohne großen Kraftaufwand in die Öffnung O eingesetzt werden

Wenn der Verschlussstopfen 10 in die Öffnung eingesetzt ist, wird der Spreizabschnitt 14 von der Montageposition durch einfaches Eindrücken des Spreizabschnitts 14 in die Spreizposition verstellt (vgl. Figuren 4 und 5). Dies geschieht mit einer Axialkraft F_{A}, die in Richtung der Axialrichtung des Verschlussstopfens 10 ausgerichtet ist. Hierbei wird der Faltabschnitt 16 zusammengefaltet, so dass die beiden Zylinderabschnitte 38, 40, die im Ausgangs- bzw. Montagezustand in axialer Richtung hintereinander liegen, nun auf derselben Höhe radial nebeneinander liegen. Die Zylinderabschnitte 38, 40 sind so bemessen, dass sie, wenn sie nebeneinander liegen, eine radial Spreizkraft oder Radialkraft F_{R} auf den Dichtabschnitt 12 ausüben, genauer gesagt auf das in den Figuren untere axiale Ende. sind Hierdurch wird das mit der Rastkante 22 versehene Ende des Dichtabschnittes 12 nach außen aufgeweitet, so dass der Dichtabschnitt 12 gegen den Rand der Öffnung O gedrückt wird.

Die Spreizposition ist in Figur 5 gezeigt, die eine Schnittdarstellung der Verschlussstopfens 10 in der Spreizposition zeigt.

Durch das Eindrücken des Spreizabschnittes 14 wird der Dichtabschnitt 12 nach außen gedrückt und erhält einen größeren Durchmesser. Der Dichtabschnitt 12 legt sich dichtend an den Rand der Öffnung O an, in die der Verschlussstopfen eingesetzt ist.

Wie aus den Figuren 5 bis 7 ersichtlich, verläuft der Faltabschnitt 16, wenn sich der Spreizabschnitt 14 in der Spreizposition befindet, im Schnitt gesehen mäanderförmig.

Durch die im Schnitt mäanderförmige Faltung des Faltabschnitts 16 in der Spreizposition wird der Verschlussstopfen 10 in dieser Position sicher fixiert. Der Teil des Faltabschnitts 16, der an den Spreizabschnitt 14 anschließt, drückt den Teil des Faltabschnitts 16, der an den Dichtabschnitt 12 anschließt nach außen. Zudem hat die mäanderförmige Faltung des Faltabschnitts 16 den Vorteil, dass sie formstabil ist.

Der Verschlussstopfen 10 wird somit durch die Umlenkung von axialem Druck in eine radiale Verformung in der Öffnung O fixiert. Besonders vorteilhaft ist, dass die Eindrückrichtung des Spreizabschnitts 14 und die Einsetzrichtung des Verschlussstopfens 10 identisch sind. Der Verschlussstopfen 10 kann folglich mit einer einzigen Bewegung in die Öffnung O eingesetzt und fixiert werden.

Die erfindungsgemäße Gestaltung des Verschlussstopfens 10 erlaubt es auch, dass der Dichtabschnitt 12 sich auch bei unterschiedlichen Blechdicken an den Öffnungsrand bzw. die Öffnungsinnenfläche anlegt.

## Patentansprüche

1. Verschlussstopfen (10) zum Verschließen einer Öffnung (O), insbesondere in einer Fahrzeugkarosserie, mit einem ringförmigen Dichtabschnitt (12), der dafür vorgesehen ist, am Rand der Öffnung (O) anzuliegen, und einem Spreizabschnitt (14), der mittels eines Faltabschnitts (16) mit dem Dichtabschnitt (12) verbunden sowie einstückig mit dem Dichtabschnitt (12) ausgeführt ist und aus einer Montageposition, in der der Faltabschnitt (16) des Spreizabschnitts (14) mindestens zwei abgestufte Zylinderabschnitte (38, 40) aufweist, und der Dichtabschnitt (12) zumindest an einem axialen Ende, an dem dieser eine umlaufende Rastkante (22) aufweist, einen Montagedurchmesser hat, in eine Spreizposition verstellbar ist, in welcher der Dichtabschnitt (12) einen größeren Durchmesser hat, wobei durch die Verstellung in die Spreizposition sich der Dichtabschnitt (12) dichtend an den Öffnungsrand bzw. die Öffnungsinnenfläche anlegt, **dadurch gekennzeichnet, dass** in der Montageposition die Zylinderabschnitte (38, 40) in axialer Richtung hintereinander liegen, und in der Spreizposition die Zylinderabschnitte (38, 40) auf derselben Höhe radial nebeneinander liegen und eine Radialkraft (F_{R}) auf den Dichtabschnitt (12) ausüben.

2. Verschlussstopfen (10) nach Anspruch 1, **dadurch gekennzeichnet, dass** der Faltabschnitt (16), wenn sich der Spreizabschnitt (14) in der Spreizposition befindet, im Schnitt gesehen mäanderförmig verläuft.

3. Verschlussstopfen (10) nach einem der vorhergehenden Ansprüche, **dadurch gekennzeichnet, dass** der Faltabschnitt (16) mit dem Dichtabschnitt (12) an dessen axialen Ende verbunden ist, das den Montagedurchmesser hat, wenn sich der Spreizabschnitt (14) in der Montageposition befindet.

4. Verschlussstopfen (10) nach einem der vorhergehenden Ansprüche, **dadurch gekennzeichnet, dass** der Spreizabschnitt (14) plattenförmig ausgeführt ist.

5. Verschlussstopfen (10) nach einem der vorhergehenden Ansprüche, **dadurch gekennzeichnet, dass** der Spreizabschnitt (14) einen Durchmesser hat, der größer ist als die Hälfte des Innendurchmessers des Dichtabschnittes (12).

6. Verschlussstopfen (10) nach einem der vorhergehenden Ansprüche, **dadurch gekennzeichnet, dass** der Dichtabschnitt (12) an dem axialen Ende, das dem axialen Ende gegenüberliegt, das mittels des Spreizabschnitts (14) aufgeweitet werden kann, eine umlaufende Dichtlippe (30) aufweist.

7. Verschlussstopfen (10) nach einem der vorhergehenden Ansprüche, **dadurch gekennzeichnet, dass** er als einstückiges Spritzgussteil ausgeführt ist.

## Claims

1. Stopper (10) for closing an opening (0), in particular in a vehicle body, with an annular sealing portion (12) which is provided to lie against the edge of the opening (0), and an expanding portion (14) which is connected to the sealing portion (12) by means of a folding portion (16) and is also formed integrally with the sealing portion (12) and is adjustable from a mounting position, in which the folding portion (16) of the expanding portion (14) has at least two stepped cylindrical portions (38, 40), and the sealing portion (12) has a mounting diameter at least at an axial end at which said sealing portion has an encircling latching edge (22), into an expanding position in which the sealing portion (12) has a larger diameter, wherein, by means of the adjustment into the expanding position, the sealing portion (12) is placed in a sealing manner against the opening edge or opening inner surface, **characterized in that** the cylindrical portions (38, 40) lie one behind the other in the axial direction in the mounting position, and, in the expanding position, the cylindrical portions (38, 40) lie radially next to each other at the same height and exert a radial force (F_{R}) on the sealing portion (12).

2. Stopper (10) according to Claim 1, **characterized in that** the folding portion (16) has a meandering profile, as seen in section, when the expanding portion (14) is in the expanding position.

3. Stopper (10) according to either of the preceding claims, **characterized in that** the folding portion (16) is connected to the sealing portion (12) at the axial end thereof which has the mounting diameter when the expanding portion (14) is in the mounting position.

4. Stopper (10) according to one of the preceding claims, **characterized in that** the expanding portion (14) is of plate-like design.

5. Stopper (10) according to one of the preceding claims, **characterized in that** the expanding portion (14) has a diameter which is greater than half of the inside diameter of the sealing portion (12).

6. Stopper (10) according to one of the preceding claims, **characterized in that** the sealing portion (12) has an encircling sealing lip (30) at the axial end which lies opposite the axial end which can be widened by means of the expanding portion (14).

7. Stopper (10) according to one of the preceding claims, **characterized in that** the stopper is designed as an integral injection-moulded part.

## Revendications

1. Bouchon de fermeture (10) pour la fermeture d'une ouverture (0), en particulier dans une carrosserie de véhicule, comprenant une portion d'étanchéité annulaire (12) qui est prévue pour s'appliquer contre le bord de l'ouverture (0), et une portion d'écartement (14) qui est raccordée à la portion d'étanchéité (12) au moyen d'une portion de pliure (16) et qui est réalisée d'une seule pièce avec la portion d'étanchéité (12) et qui peut être déplacée d'une position de montage dans laquelle la portion de pli (16) de la portion d'écartement (14) présente au moins deux portions cylindriques étagées (38, 40) et la portion d'étanchéité (12), au niveau d'au moins une extrémité axiale à laquelle celle-ci présente une arête d'encliquetage périphérique (22), a un diamètre de montage, dans une position d'écartement dans laquelle la portion d'étanchéité (12) a un plus grand diamètre, le déplacement dans la position d'écartement provoquant l'application hermétique de la portion d'étanchéité (12) contre le bord de l'ouverture ou la surface interne de l'ouverture, **caractérisé en ce que** dans la position de montage, les portions cylindriques (38, 40) sont situées l'une derrière l'autre dans la direction axiale, et dans la position d'écartement, les portions cylindriques (38, 40) sont situées radialement l'une à côté de l'autre à la même hauteur et exercent une force radiale (F_{R}) sur la portion d'étanchéité (12).

2. Bouchon de fermeture (10) selon la revendication 1, **caractérisé en ce que** la portion de pli (16), lorsque la portion d'écartement (14) se trouve dans la position d'écartement, s'étend, vu en coupe, en forme de méandres.

3. Bouchon de fermeture (10) selon l'une quelconque des revendications précédentes, **caractérisé en ce que** la portion de pli (16) est raccordée à la portion d'étanchéité (12) au niveau de son extrémité axiale qui a le diamètre de montage quand la portion d'écartement (14) se trouve dans la position de montage.

4. Bouchon de fermeture (10) selon l'une quelconque des revendications précédentes, **caractérisé en ce que** la portion d'écartement (14) est réalisée en forme de plaque.

5. Bouchon de fermeture (10) selon l'une quelconque des revendications précédentes, **caractérisé en ce que** la portion d'écartement (14) présente un diamètre supérieur à la moitié du diamètre intérieur de la portion d'étanchéité (12).

6. Bouchon de fermeture (10) selon l'une quelconque des revendications précédentes, **caractérisé en ce que** la portion d'étanchéité (12) présente une lèvre d'étanchéité périphérique (30) au niveau de l'extrémité axiale qui est opposée à l'extrémité axiale qui peut être élargie au moyen de la portion d'écartement (14).

7. Bouchon de fermeture (10) selon l'une quelconque des revendications précédentes, **caractérisé en ce qu'**il est réalisé sous forme de pièce moulée d'une seule pièce par injection.
